# EUROPÄISCHE PATENTSCHRIFT

(11) **EP 1 019 233 B1**
(45) Veröffentlichungstag und Bekanntmachung des Hinweises auf die Patenterteilung: **29.01.2003**
(21) Anmeldenummer: 97947031.7
(22) Anmeldetag: 28.10.1997
(51) Int. Cl.: B29C 45/14, B29C 45/16

(54) **VERFAHREN UND VORRICHTUNG ZUR HERSTELLUNG EINER ZAHNBÜRSTE**
PROCESS AND DEVICE FOR MANUFACTURING A TOOTHBRUSH
PROCEDE ET DISPOSITIF POUR PRODUIRE UN BROSSE A DENTS

(30) Priorität: 01.10.1997 DE 19743556
(43) Veröffentlichungstag der Anmeldung: 19.07.2000
(73) Patentinhaber: M + C SCHIFFER GmbH, 53577 Neustadt (DE)
(72) Erfinder: LANVERS, Andreas, D-53604 Bad Honnef (DE)
(74) Vertreter: Grünecker, Kinkeldey, Stockmair & Schwanhäusser Anwaltssozietät
(86) Internationale Anmeldenummer: EP9705952
(87) Internationale Veröffentlichungsnummer: WO99016604

(56) Entgegenhaltungen:
- DE-A- 3 512 192
- DE-A- 4 311 186
- US-A- 2 317 110
- PATENT ABSTRACTS OF JAPAN vol. 8, no. 158 (M-311), 21.Juli 1984 & JP 59 052632 A (SHIYOUWA KASEI:KK), 27.März 1984,

## Beschreibung

Die vorliegende Erfindung betrifft ein Verfahren und eine Vorrichtung zur Herstellung einer Zahnbürste mit einem Griffteil, einem Bürstenkopf und einer Mehrzahl von Borstenbündel, wobei zumindest der Bürstenkopf teilweise aus einer ersten und einer zweiten Komponente besteht.

Bei der Herstellung von Zahnbürsten ist es bekannt, den Bürstenkopf aus einer Hartkomponente durch Spritzgießen herzustellen, wobei dieser Bürstenkopf Sacklöcher aufweist, in die die Bürstenbündel mit der sogenannten Ankermethode eingedrückt werden. Weiterhin ist bei der Herstellung von Zahnbürsten die sogenannte ankerlose Methode bekannt, bei der die Borstenbündel von einem hartelastischen Kunststoff umspritzt werden. Durch den hartelastischen Kunststoff wird verhindert, daß die Borstenbündel leicht aus dem Bürstenkopf herausgezogen werden. Weiterhin bestimmt die hartelastische Komponente im wesentlichen das elastische Verhalten des Bürstenkopfs. Bei Zahnbürsten ist es jedoch wünschenswert, daß der Bürstenkopf Borstenabschnitte aufweist, die eine geringe relative Steifigkeit haben und Borstenabschnitte aufweist, die eine hohe relative Steifigkeit haben. Dazu wäre es möglich, Borstenbündel mit unterschiedlicher Steifigkeit zu verwenden. Die Verwendung unterschiedlicher Borsten bei einer Zahnbürste erhöht jedoch den Fertigungsaufwand erheblich.

Es ist daher die Aufgabe der vorliegenden Erfindung, ein Verfahren zur Herstellung einer Zahnbürste der eingangs genannten Art bereitzustellen, bei dem der Bürstenkopf und die darin aufgenommenen Borstenbündel verbesserte Steifigkeitseigenschaften aufweisen. Des weiteren ist es eine Aufgabe der Erfindung, eine Spritzgießeinrichtung zur Herstellung einer Zahnbürste der eingangs genannten Art bereitzustellen, mit der auf kostengünstige Weise eine Zahnbürste hergestellt werden kann, deren Bürstenkopf und die darin aufgenommenen Borstebündel verbesserte Steifigkeitseigenschaften aufweisen.

Die erstgenannte Aufgabe wird erfindungsgemäß durch das Verfahren mit den Merkmalen des Anspruches 1 gelöst.

Die nachgenannte Aufgabe wird bei einer Spritzgießeinrichtung zur Herstellung einer Zahnbürste erfindungsgemäß durch die Merkmale des Anspruches 13 gelöst.

Vorteilhafte Weiterbildungen der Erfindung sind jeweils in den Unteransprüchen dargelegt.

Nachfolgend wird die Erfindung anhand von Ausführungsbeispielen in Verbindung mit den dazugehörigen Zeichnungen näher erläutert. In diesen zeigen:
- Fig. 1A-D: den prinzipiellen Aufbau einer Spritzgießeinrichtung und den prinzipiellen Ablauf des Herstellungsverfahrens,
- Fig. 2A-D: drei beispielhafte Zahnbürsten, die mit Hilfe der Vorrichtung und des Verfahrens, das in Verbindung mit den Fig. 1A-D erläutert ist, hergestellt sind.

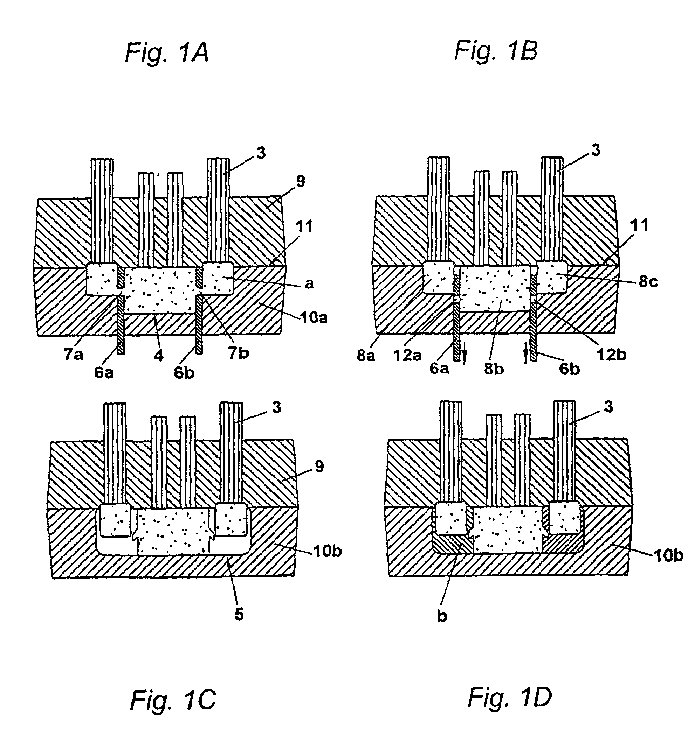

Figur 1A zeigt einen Querschnitt durch eine Spritzgießform der Spritzgießeinrichtung mit einem Formoberteil 9 und einem ersten Formunterteil 10a, die sich an einer Formtrennebene 11 berühren. Die beiden Formhälften 9 und 10a bilden einen ersten Formhohlraum 4, in dem beispielsweise, wie hier gezeigt, zwei bewegbare Formkerne 6a, 6b eingesetzt sind. Die bewegbaren Formkerne sind in Öffnungen des ersten Formunterteils 10a aufgenommen. Wie in Fig. 1B gezeigt ist, lassen sich die beiden bewegbaren Formkerne 6a, 6b im wesentlichen senkrecht zur Formtrennebene 11 bewegen. An den bewegbaren Formkernen 6a, 6b sind Durchtrittsöffnungen 12a, 12b ausgebildet. Diese Durchtrittsöffnungen 12a, 12b sind so ausgelegt, daß sie den Durchtritt von Hartkomponente a beim Spritzgießen ermöglichen. Weiterhin sind an den Durchtrittsöffnungen 12a, 12b Einrichtungen, wie z.B. Messer oder Schnittkanten, vorgesehen, um durch die Durchtrittsöffnungen 12a, 12b gebildete Stegabschnitte 7a, 7b zu durchtrennen, wie dies später näher erläutert wird.

Wie in den Figuren 1C und 1 D gezeigt, weist die Spritzgießeinrichtung ein zweites Formunterteil 10b auf, das mit dem Formoberteil 9 einen zweiten Formhohlraum 5 bildet, der größer als der erste Formhohlraum 4 ist.

Nachfolgend wird die Arbeitsweise der Spritzgußeinrichtung näher erläutert. Zunächst werden die Borstenbündel in die Spritzgußform eingesetzt, die, wie in Figur 1A gezeigt, das Formoberteil 9, das erste Formunterteil 10a und die bewegbaren Formkerne 6a und 6b aufweist. Sind die Borstenbündel 3 in dem Formoberteil 9 eingesetzt, so werden die Enden der Borstenbündel durch Hartkomponente a umspritzt. Dabei bilden sich Borstenbündelhalteabschnitte 8a, 8b, 8c, die durch Stegabschnitte 7a, 7b miteinander verbunden sind. Die Stegabschnitte 7a, 7b werden dadurch gebildet, daß Hartkomponente a die Öffnungen 12a, 12b in den beweglichen Formkernen 6a, 6b während des Spritzgießens ausfüllt. Nachdem auf diese Weise der Grundkörper aus Hartkomponente a der Zahnbürste hergestellt ist, der Borstenbündelhalteabschnitte 8a, 8b, 8c aufweist, werden die Stegabschnitte 7a, 7b, die zwischen den Borstenbündelhaltebereichen 8a, 8b, 8c ausgebildet sind abgeschert. Dies geschieht dadurch, daß die bewegbaren Formkerne 6a, 6b im wesentlichen senkrecht zur Formtrennebene 11 durch die Öffnungen im ersten Formunterteil 10a herausgezogen werden. Danach besteht zwischen den Borstenbündelhaltebereichen 8a,8b und 8c keine Verbindung aus Hartkomponente a mehr. Spätestens in dieser Herstellungsphase werden die Borstenbündel 3 in dem Formoberteil 9 fixiert, in dem sie durch eine Haltevorrichtung (nicht gezeigt) festgegklemmt werden. Danach wird das erste Formunterteil 10a durch das zweite Formunterteil 10b ersetzt, wie dies in Fig. 1C gezeigt ist. Das erste Formoberteil 9 und das zweite Formunterteil 10b bilden zusammen einen zweiten Formhohlraum 5, der größer als der erste Formhohlraum 4 ist. Danach werden die aus Hartkomponente a gespritzten und voneinander getrennten Borstenbündelhaltebereiche 8a, 8b und 8c mit Weichkomponente b umspritzt. Nach Beendigung dieses Herstellungsprozesses kann die Zahnbürste aus der Form entnommen werden. Als Weichkomponente wird vorzugsweise ein thermoplastischer Elastomer mit einer Härte kleiner 90 shore A verwendet.

Die dadurch hergestellte Zahnbürste weist somit Borstenbündel auf, die von Hartkomponente a umschlossen sind, wobei diese aus Hartkomponente gebildeten Borstenbündelhaltebereiche vollständig in Weichkomponente b gelagert sind, so daß das jeweilige Borstenbündel entsprechend der elastischen Eigenschaften der weichelastischen Komponente bewegbar in dem Bürstenkopf gehalten ist. Dabei zeigt Fig. 1 B einzelne Borstenbündel 3, um den Borstenbündelhaltebereiche 8a, 8c ausgebildet werden, und Gruppen von Borstenbündeln, an denen ein gemeinsamer Borstenbündelhaltebereich 8b ausgebildet ist.

Das Verfahren zur Herstellung einer Zahnbürste mit verbesserten elastischen Eigenschaften zielt darauf ab, daß zunächst ein Grundkörper eines Bürstenkopfes 2 aus Hartkomponente a gespritzt wird, wobei die einzelnen Borstenbündel 3 in diesem Grundkörper aufgenommen sind und Borstenbündelhalteabschnitte 8a, 8b, 8c aus Hartkomponente gebildet werden, die nur durch einen oder mehrere Stegabschnitte 7a, 7b mit dem übrigen Grundkörper verbunden sind, um den gesamten Grundkörper des Bürstenkopfes in einem Arbeitsgang herzustellen. Diese Stegabschnitte 7a, 7b werden nachfolgend durchtrennt, so daß zwischen den einzelnen Borstenbündelhaltebereichen 8a, 8b, 8c keine Verbindung mehr besteht. Dazu ist es notwendig sicherzustellen, daß die einzelnen Borstenbündel 3 in der vorgesehenen Lage fixiert sind. Als nächstes werden die Borstenbündelhalteabschnitte und der übrige Bürstenkopf ganz oder teilweise mit einer Weichkomponente b umspritzt, um so eine Verbindung zwischen den zuvor getrennten Teilen wiederherzustellen. Bei der Herstellung des Grundkörpers des Bürstenkopfes kann dieser einzeln oder in Verbindung mit dem Griffteil 1 in einem Arbeitsgang hergestellt werden. Bei dem Umspritzen des Bürstenkopfes ganz oder teilweise mit Weichkomponente kann auch das Griffteil entsprechend ganz oder teilweise mit Weichkomponente umspritzt werden.

Das oben genannte Verfahren bezieht sich vorzugsweise auf die Herstellung einer Zahnbürste in der ankerlosen Technik, bei der die Borstenbündel an einem Ende mit einer Verdickung, zum Beispiel durch Anschmelzen, versehen werden und danach in Hartkomponente eingebettet werden. Dem Fachmann ist jedoch klar, daß in Abwandlung des Verfahrens und der Vorrichtung eine Zahnbürste in der Ankertechnik, d.h. ein Borstenbündel wird U-förmig um einen Anker, z.B. ein Blättchen aus Metall oder Kunststoff, geschlungen und in Sacklöcher eingestanzt, nachdem diese durch Spritzgießen des Bürstenkopfes aus Hartkomponente gebildet wurden, ebenso anzuwenden ist. Dabei sind lediglich Haltevorrichtungen vorzusehen, die die jeweiligen Borstenbündelhalteabschnitte, die die Sacklöcher aufweisen, fixieren, nachdem die Stegabschnitte durchtrennt sind. Falls es notwendig ist, sind weitere Haltevorrichtungen vorzusehen, die das Einstanzen der Borstenbündel mit dem Anker in die in Weichkomponente eingebetteten Borstenbündelhaltebereiche ermöglichen. In einigen Fällen ist es zweckmäßig, bei der Herstellung einer Zahnbürste die ankerlose Technik mit der Ankertechnik zu kombinieren.

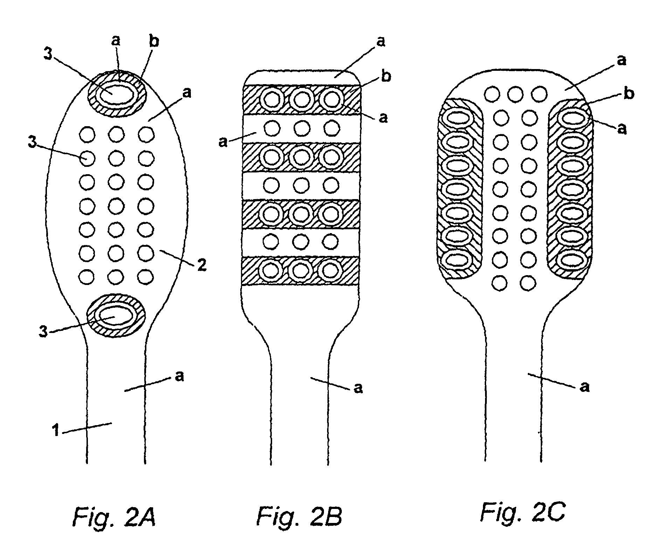

In den Figuren 2A bis 2C sind drei Beispiele von Zahnbürsten, die unter Zuhilfenahme des genannten Verfahrens und der Spritzgießeinrichtung hergestellt wurden, gezeigt. Dabei zeigt Fig. 2a einen Bürstenkopf 2 und ein Griffteil 1. Der Bürstenkopf 2 weist eine Mehrzahl von Borstenbündeln 3 auf, die in Hartkomponente a eingebettet sind. In einem mittleren Bereich des Bürstenkopfes 2 sind mehrere Borstenbündel 3 in einem Abschnitt aus Hartkomponente a eingebettet. In einem vorderen und hinteren Bereich des Bürstenkopfes 2 ist jeweils ein einzelnes Borstenbündel angeordnet, das jeweils in einem Borstenbündelhalteabschnitt aus Hartkomponente a eingebettet ist. Dieser Borstenbündelhalteabschnitt ist wiederum in Weichkomponente b eingebettet, um eine höhere Elastizität zu erreichen. Bei der Herstellung des Grundkörpers dieser Zahnbürste sind die bewegbaren Formkerne so ausgebildet, daß sie Öffnungen aufweisen, um die Borstenbündelhaltebereiche der Borstenbündel 3 im vorderen und hinteren Bereich des Bürstenkopfes 2 in einem Spritzgußvorgang mit dem mittleren Bereich des Bürstenkopfes 2 gespritzt werden können. Dadurch bilden sich ein oder mehrere Stegabschnitte zwischen dem Borstenbündelhalteabschnitten aus Hartkomponente a des vorderen und des hinteren Kopfbereichs und dem mittleren Bürstenbereich. Durch das Herausziehen der bewegbaren Formkerne werden diese Stegabschnitte durchtrennt. Der Formhohlraum, der durch das Herausnehmen der Formkerne und/oder ein zusätzlicher Formhohlraum, der durch den Wechsel eines Teils des Formwerkzeugs oder das Entfernen zusätzlicher Formkerne entsteht, wird dann mit Weichkomponente b entsprechend einem Zweikomponentenspritzgießverfahren ausgefüllt. Dabei ist ersichtlich, daß die Form, die Lage und die Anzahl der bewegbaren Formkerne entsprechend der gewünschten Geometrie und der Beborstung des Bürstenkopfes gewählt wird.

Die Fig. 2B zeigt ein weiteres Beispiel einer Zahnbürste, die unter Zuhilfenahme des genannten Verfahrens und der Spritzgießeinrichtung hergestellt wurde. Die einzelnen Borstenbündel sind dabei in ähnlicher Weise, wie in Fig. 2A gezeigt, einzeln oder in Gruppen in Hartkomponente a eingebettet. Einzelne Borstenbündel sind dabei in Abschnitte, die aus Weichkomponente b gebildet sind, eingebettet. Diese Abschnitte aus Weichkomponente b wechseln mit Abschnitten aus Hartkomponente a ab. Ähnlich wie in Verbindung mit der Fig. 2A erläutert, werden die Anzahl und die Ausgestaltung der zur Herstellung notwendigen Formkerne entsprechend der Geometrie und der gewünschten Eigenschaften der Beborstung des Bürstenkopfes gewählt.

Die Fig. 2C zeigt ein weiteres Ausführungsbeispiel einer Zahnbürste, die unter Zuhilfenahme des genannten Verfahrens und der Spritzgießeinrichtung hergestellt wurde. Bei der Zahnbürste gemäß Fig. 2C sind in einem mittleren Bürstenbereich mehrere Borstenbündel in Hartkomponente a eingebettet. In einem rechten und linken Seitenbereich sind einzelne Borstenbündel mit Borstenbündelhalteabschnitten aus Hartkomponente a versehen und in einem Abschnitt aus Weichkomponente b eingebettet. Auch bei der Zahnbürste gemäß Fig. 2C richtet sich Lage, Form und Anzahl der Formkerne nach der gewünschten Geometrie und den gewünschten Eigenschaften des Bürstenkopfes.

Bei den in den Fig. 2A bis 2C gezeigten Ausführungsbeispielen sind einzelne Borstenbündel von Hartkomponente a umschlossen, um einen Borstenbündelhaltebereich zu bilden. Diese Borstenbündelhaltebereiche sind von Weichkomponente b umschlossen, um die elastischen Eigenschaften zu verbessern. Dem Fachmann ist jedoch klar, daß auch eine Gruppe von Borstenbündeln mit einem gemeinsamen Borstenbündelhalteabschnitt gebildet werden kann, der wiederum in Weichkomponente entsprechend dem genannten Verfahren eingebettet werden kann. Weiterhin zeigt sich bei diesen Ausführungsbeispielen, insbesondere bei den Zahnbürsten gemäß der Fig. 2A und 2C, daß Borstenbündel des mittleren Bereichs des Bürstenkopfes 2 weitgehend problemlos auch in der Ankertechnik eingebracht werden können.

## Patentansprüche

1. Verfahren zur Herstellung einer Zahnbürste mit einem Griffteil (1) und einem Bürstenkopf (2), der eine Mehrzahl von Borstenbündel (3) aufweist, wobei zumindest der Bürstenkopf teilweise aus einer ersten und einer zweiten Komponente besteht, **gekennzeichnet durch** die Verfahrensschritte:
Spritzgießen eines Grundkörpers eines Bürstenkopfes aus einer ersten Komponente (a) in einem ersten Formhohlraum (4), wobei die Borstenbündel (3) an ihren Enden in zumindest einem Borstenbündelhaltebereich (8a,8b,8c) aus der ersten Komponente eingebettet werden und der Borstenbündelhaltebereich **durch** zumindest einen Stegabschnitt (7a,7b) mit den übrigen Bereichen aus der ersten Komponente (a) verbunden wird,
Abscheren des Stegabschnitts (7a,7b) zwischen dem Borstenbündelhaltebereich (8a) und dem übrigen Bereich (8b,8c),
Wechseln des Formhohlraums, wobei der zweite Formhohlraum (5) im Bereich der Borstenbündelhaltebereiche (8a,8b,8c) größer als der erste Formhohlraum (4) ist,
Umspritzen der aus der ersten Komponente (a) gebildeten Borstenbündelhaltebereiche (8a,8b,8c) mit der zweiten Komponente (b).

2. Verfahren zur Herstellung einer Zahnbürste nach Anspruch 1, **dadurch gekennzeichnet, daß** die erste Komponente (a) eine Hartkomponente ist und die zweite Komponente (b) eine Weichkomponente ist.

3. Verfahren zur Herstellung einer Zahnbürste nach Anspruch 1 oder 2, **dadurch gekennzeichnet, daß** der Wechsel des Formhohlraums durch ein Umsetzen der in die erste Komponente (a) eingebetteten Borstenbündel (3) von dem ersten Formhohlraum (4) in den zweiten Formhohlraum (5) erfolgt.

4. Verfahren zur Herstellung einer Zahnbürste nach einem der Ansprüche 1 bis 3, **dadurch gekennzeichnet, daß** das Abscheren des Stegabschnitts (7a,7b) durch das Verschieben eines bewegbaren Formkerns (6a,6b) eines Formwerkzeugs erfolgt.

5. Verfahren zur Herstellung einer Zahnbürste nach einem der Ansprüche 1 bis 4, **gekennzeichnet durch** Spritzen mehrerer Borstenbündelhaltebereiche (8a,8b,8c) während des Spritzgießens des Grundkörpers über Stegabschnitte (7a,7b).

6. Verfahren zur Herstellung einer Zahnbürste nach einem der Ansprüche 1 bis 5, **dadurch gekennzeichnet, daß** eine Vielzahl von Borstenbündel durch die erste Komponente (a) umspritzt werden, um einen Borstenbündelhalteabschnitt (8b) zu bilden.

7. Verfahren zur Herstellung einer Zahnbürste nach einem der Ansprüche 1 bis 6, **dadurch gekennzeichnet, daß** ein einzelnes Borstenbündel durch die erste Komponente (a) umspritzt wird, um ein Borstenbündelhalteabschnitt (8a,8c) zu bilden.

8. Verfahren zur Herstellung einer Zahnbürste nach einem der Ansprüche 1 bis 7, **dadurch gekennzeichnet, daß** die Borstenbündel an ihren Enden mit Verdickungen versehen werden, und die Verdickungen mit der ersten Komponente (a) während des Spritzgießens des Grundkörpers umspritzt werden.

9. Verfahren zur Herstellung einer Zahnbürste nach einem der Ansprüche 1 bis 8, **dadurch gekennzeichnet, daß** das Abscheren der Stegabschnitte (7a,7b) weitgehend senkrecht zu deren Längserstreckung, vorzugsweise in noch geschlossenem Spritzgießwerkzeug, erfolgt.

10. Verfahren zur Herstellung einer Zahnbürste nach einem der Ansprüche 1 bis 9, **gekennzeichnet durch** Spritzgießen des Griffteils (1) aus der ersten Komponente (a) zusammen mit dem Spritzgießen des Grundkörpers des Bürstenkopfes (2).

11. Verfahren zur Herstellung einer Zahnbürste nach Anspruch 10, **gekennzeichnet durch** Umspritzen des Griffteils (1) oder Teile desselben mit der zweiten Komponente (b) zusammen mit dem Umspritzen der Borstenbündelhaltebereiche (8a,8b,8c).

12. Verfahren zur Herstellung einer Zahnbürste nach einem der Ansprüche 1 bis 11, **dadurch gekennzeichnet, daß** der Wechsel des Formhohlraums durch den Wechsel zumindest eines Teils eines Formwerkzeugs erfolgt.

13. Verfahren zur Herstellung einer Zahnbürste nach einem der Ansprüche 1 bis 12, **dadurch gekennzeichnet, daß** die Zahnbürste nach dem Umspritzen mit der zweiten Komponente (b) entformt wird.

14. Spritzgießeinrichtung zur Herstellung einer Zahnbürste, insbesondere einer Zahnbürste nach einem der Ansprüche 1 bis 12, mit einem Formoberteil (9) und einem ersten Formunterteil (10a), die zusammen einen ersten Formhohlraum (4) bilden, um einen Grundkörper eines Bürstenkopfes (2) zu spritzen, **dadurch gekennzeichnet, daß** zumindest ein bewegbarer Formkem (6a,6b) in dem ersten Formhohlraum (4) vorgesehen ist, wobei der Formkern (6a,6b) erste Einrichtungen (12a,12b) aufweist, die während des Spritzens die Ausformung zumindest eines Stegabschnitts (7a,7b) zwischen gespritzten Borstenbündelhaltebereichen (8a,8b,8c) vorsehen und der Formkern (6a,6b) zweite Einrichtungen aufweist, die den Stegabschnitt (7a,7b) abscheren, wenn der Formkem in vorgegebener Weise bewegt wird.

15. Spritzgießeinrichtung nach Anspruch 14, **dadurch gekennzeichnet, daß** die ersten Einrichtungen (12a,12b) vorgesehen sind, um eine Vielzahl von Stegabschnitten (7a,7b) auszuformen.

16. Spritzgießeinrichtung nach einem der Ansprüche 14 oder 15, **dadurch gekennzeichnet, daß** eine Vielzahl von beweglichen Formkemen (6a,6b) vorgesehen ist

17. Spritzgießeinrichtung nach einem der Ansprüche 14 bis 16, **dadurch gekennzeichnet, daß** das Formoberteil (9) Aussparungen aufweist, um die einzelnen Borstenbündel (3) des Bürstenkopfes (2) während des Spritzvorgangs aufzunehmen.

18. Spritzgießeinrichtung nach einem der Ansprüche 14 bis 17, **dadurch gekennzeichnet, daß** zumindest ein Formkern (6a,6b) weitgehend senkrecht zu der Längs**e**rstreckung der Stegabschnitte (7a,7b) bewegbar ist.

19. Spritzgießeinrichtung nach einem der Ansprüche 14 bis 18, **dadurch gekennzeichnet, daß** ein zweites Formunterteil (10b) vorgesehen ist, das mit dem Formoberteil (9) einen zweiten Formhohlraum (5) bildet, der größer als der erste Formhohlraum (4) ist.

20. Spritzgießeinrichtung nach einem der Ansprüche 14 bis 19, **dadurch gekennzeichnet, daß** eine Haltevorrichtung vorgesehen ist, um die Borstenbündel während des Spritzgießens in dem Formoberteil (9) zu halten.

21. Spritzgießsinrichtung nach einem der Ansprüche 14 bis 20, **dadurch gekennzeichnet, daß** die Spritzgießeinrichtung Einrichtungen aufweist, um den Grundkörper des Bürstenkopfes aus einer ersten Komponente zu spritzen, und Einrichtungen aufweist, um den Grundkörper mit einer zweiten Komponente zu umspritzen.

## Claims

1. Process for manufacturing a toothbrush with a handle part (1) and a brush head (2) which has a plurality of bristle tufts (3), wherein at least the brush head partly consists of a first component and a second component, **characterized by** the process steps of:
injection moulding a basic body of a brush head consisting of a first component (a) in a first mould cavity (4), the bristle tufts (3) being embedded at their ends in at least one bristle tuft anchoring zone (8a, 8b, 8c) consisting of the first component and the bristle tuft anchoring zone being joined by at least one gate portion (7a, 7b) to the remaining zones consisting of the first component (a),
shearing the gate portion (7a, 7b) between the bristle tuft anchoring zone (8a) and the remaining zone (8b, 8c),
changing the mould cavity, the second mould cavity (5) being larger in the region of the bristle tuft anchoring zones (8a, 8b, 8c) than the first mould cavity (4),
injecting the second component (b) around the bristle tuft anchoring zones (8a, 8b, 8c) formed from the first component (a).

2. Process for manufacturing a toothbrush according to Claim 1, **characterized in that** the first component (a) is a hard component and the second component (b) is a soft component.

3. Process for manufacturing a toothbrush according to Claim 1 or Claim 2, **characterized in that** the change of mould cavity is effected by transferring the bristle tufts (3) embedded in the first component (a) from the first mould cavity (4) into the second mould cavity (5).

4. Process for manufacturing a toothbrush according to any one of Claims 1 to 3, **characterized in that** the shearing of the gate portion (7a, 7b) is effected by shifting a movable core (6a, 6b) of a moulding die.

5. Process for manufacturing a toothbrush according to any one of Claims 1 to 4, **characterized by** the injection of a plurality of bristle tuft anchoring zones (8a, 8b, 8c) during the injection moulding of the basic body via gate portions (7a, 7b).

6. Process for manufacturing a toothbrush according to any one of Claims 1 to 5, **characterized in that** a bristle tuft anchoring portion (8b) is formed by injecting the first component (a) around a plurality of bristle tufts.

7. Process for manufacturing a toothbrush according to any one of Claims 1 to 6, **characterized in that** a bristle tuft anchoring portion (8a, 8c) is formed by injecting the first component (a) around a single bristle tuft.

8. Process for manufacturing a toothbrush according to any one of Claims 1 to 7, **characterized in that** the bristle tufts are provided with thickenings at their ends and the first component (a) is injected around the thickenings during the injection moulding of the basic body.

9. Process for manufacturing a toothbrush according to any one of Claims 1 to 8, **characterized in that** the shearing of the gate portions (7a, 7b) is effected substantially perpendicularly to their longitudinal extent, preferably within the injection moulding die while the die is still closed.

10. Process for manufacturing a toothbrush according to any one of Claims 1 to 9, **characterized by** injection moulding of the handle part (1) from the first component (a) concurrently with the injection moulding of the basic body of the brush head (2).

11. Process for manufacturing a toothbrush according to Claim 10, **characterized by** injection of the second component (b) around the handle (1) or parts thereof concurrently with the injection around the bristle tuft anchoring zones (8a, 8b, 8c).

12. Process for manufacturing a toothbrush according to any one of Claims 1 to 11, **characterized in that** the change of mould cavity is effected by changing at least a part of a moulding die.

13. Process for manufacturing a toothbrush according to any one of Claims 1 to 12, **characterized in that** the toothbrush is stripped from the mould following injection of the second component (b).

14. Injection moulding device for manufacturing a toothbrush, in particular a toothbrush according to any one of Claims 1 to 12, with an upper die (9) and a first lower die (10a) which together form a first mould cavity (4) for injection of a basic body of a brush head (2), **characterized in that** at least one movable core (6a, 6b) is provided in the first mould cavity (4), the core (6a, 6b) having first devices (12a, 12b) which, during the injection moulding, form at least one gate portion (7a, 7b) between injection moulded bristle tuft anchoring zones (8a, 8b, 8c) and the core (6a, 6b) has second devices which shear the gate portion (7a, 7b) when the core is moved in a specified way.

15. Injection moulding device according to Claim 14, **characterized in that** the first devices (12a, 12b) are provided to form a plurality of gate portions (7a, 7b).

16. Injection moulding device according to Claim 14 or Claim 15, **characterized in that** a plurality of movable cores (6a, 6b) are provided.

17. Injection moulding device according to any one of Claims 14 to 16, **characterized in that** the upper die (9) has recesses to hold the individual bristle tufts (3) of the brush head (2) during the injection operation.

18. Injection moulding device according to any one of Claims 14 to 17, **characterized in that** at least one core (6a, 6b) is movable substantially perpendicularly to the longitudinal extension of the gate portions (7a, 7b).

19. Injection moulding device according to any one of Claims 14 to 18, **characterized in that** a second lower die (10b) is provided which forms with the upper die (9) a second mould cavity (5) that is larger than the first mould cavity (4).

20. Injection moulding device according to any one of Claims 14 to 19, **characterized in that** a holding apparatus is provided to hold the bristle tufts in the upper die (9) during the injection moulding.

21. Injection moulding device according to any one of Claims 14 to 20, **characterized in that** the injection moulding device has devices for injection moulding the basic body of the brush head from a first component, and has devices for injecting a second component around the basic body.

## Revendications

1. Procédé pour fabriquer une brosse à dents comprenant une partie formant poignée (1) et une tête de brosse (2) présentant une multiplicité de faisceaux de poils (3), selon lequel la tête de brosse, au moins, se compose en partie d'un premier et d'un second composant,
**caractérisé par** les phases de procédé suivantes :
moulage par injection d'un corps de base d'une tête de brosse à partir d'un premier composant (a) dans une première cavité de moule (4), les faisceaux de poils (3) étant noyés, à leur extrémité, dans au moins une zone de fixation de faisceaux de poils (8a, 8b, 8c) composée du premier composant, et cette zone de fixation de faisceaux de poils étant reliée par au moins une section d'arête (7a, 7b) aux zones restantes du premier composant (a),
cisaillement de la section d'arête (7a, 7b) entre la zone de fixation de faisceaux de poils (8a) et la zone restante (8b, 8c),
changement de la cavité de moule, la seconde cavité de moule (5), dans la région des zones de fixation de faisceaux de poils (8a, 8b, 8c), étant plus grande que la première cavité de moule (4),
enrobage par injection des zones de fixation de faisceaux de poils (8a, 8b, 8c) formées à partir du premier composant (a), à l'aide du second composant (b).

2. Procédé pour fabriquer une brosse à dents selon la revendication 1, **caractérisé en ce que** le premier composant (a) est un composant dur, et le second composant (b) un composant souple.

3. Procédé pour fabriquer une brosse à dents selon la revendication 1 ou 2, **caractérisé en ce qu'**on change la cavité de moule en faisant passer les faisceaux de poils (3) noyés dans le premier composant (a) de la première cavité de moule (4) à la seconde cavité de moule (5).

4. Procédé pour fabriquer une brosse à dents selon l'une des revendications 1 à 3, **caractérisé en ce que** le cisaillement de la section d'arête (7a, 7b) se fait grâce au déplacement d'un noyau de moulage mobile (6a, 6b) d'un outil de moulage.

5. Procédé pour fabriquer une brosse à dents selon l'une des revendications 1 à 4, **caractérisé par** l'injection de plusieurs zones de fixation de faisceaux de poils (8a, 8b, 8c), pendant le moulage par injection du corps de base, par-dessus les sections d'arêtes (7a, 7b).

6. Procédé pour fabriquer une brosse à dents selon l'une des revendications 1 à 5, **caractérisé en ce qu'**une multiplicité de faisceaux de poils sont enrobés par injection à l'aide du premier composant (a) afin de former une section de fixation de faisceaux de poils (8b).

7. Procédé pour fabriquer une brosse à dents selon l'une des revendications 1 à 6, **caractérisé en ce qu'**un faisceau de poils individuel est enrobé par injection à l'aide du premier composant (a) afin de former une section de fixation de faisceaux de poils (8a, 8c).

8. Procédé pour fabriquer une brosse à dents selon l'une des revendications 1 à 7, **caractérisé en ce que** les faisceaux de poils sont pourvus d'épaississements, à leur extrémité, et ces épaississements sont enrobés par injection à l'aide du premier composant (a) pendant le moulage par injection du corps de base.

9. Procédé pour fabriquer une brosse à dents selon l'une des revendications 1 à 8, **caractérisé en ce que** le cisaillement des sections d'arêtes (7a, 7b) se fait en grande partie perpendiculairement à leur extension longitudinale, de préférence dans le moule d'injection encore fermé.

10. Procédé pour fabriquer une brosse à dents selon l'une des revendications 1 à 9, **caractérisé par** le moulage par injection de la partie formant poignée (1) à partir du premier composant (a) en même temps que le moulage par injection du corps de base de la tête de brosse (2).

11. Procédé pour fabriquer une brosse à dents selon la revendication 10, **caractérisé par** l'enrobage par injection de la partie formant poignée (1) ou de parties de celle-ci à l'aide du second composant (b) en même temps que l'enrobage par injection des zones de fixation de faisceaux de poils (8a, 8b, 8c).

12. Procédé pour fabriquer une brosse à dents selon l'une des revendications 1 à 11, **caractérisé en ce que** le changement de la cavité de moule se fait grâce au changement d'une partie au moins d'un outil de moulage.

13. Procédé pour fabriquer une brosse à dents selon l'une des revendications 1 à 12, **caractérisé en ce que** la brosse à dents est démoulée après l'enrobage avec le second composant (b).

14. Dispositif de moulage par injection pour fabriquer une brosse à dents, en particulier une brosse à dents selon l'une des revendications 1 à 12, comprenant une partie de moule supérieure (9) et une première partie de moule inférieure (10a) qui définissent une première cavité de moule (4) en vue du moulage par injection d'un corps de base d'une tête de brosse (2), **caractérisé en ce qu'**au moins un noyau de moulage mobile (6a, 6b) est prévu dans la première cavité (4), le noyau de moulage (6a, 6b) comportant des premiers dispositifs (12a, 12b) qui prévoient la formation d'au moins une section d'arête (7a, 7b) entre les zones de fixation de faisceaux de poils injectés (8a, 8b, 8c) pendant le moulage par injection, et le noyau de moulage (6a, 6b) comportant des seconds dispositifs qui cisaillent la section d'arête (7a, 7b) quand le noyau de moulage est déplacé d'une manière prédéfinie.

15. Dispositif de moulage par injection selon la revendication 14, **caractérisé en ce que** les premiers dispositifs (12a, 12b) sont prévus pour former une multiplicité de sections d'arêtes (7a, 7b).

16. Dispositif de moulage par injection selon la revendication 14 ou 15, **caractérisé en ce qu'**il est prévu une multiplicité de noyaux de moulage mobiles (6a, 6b).

17. Dispositif de moulage par injection selon l'une des revendications 14 à 16, **caractérisé en ce que** la partie supérieure de moulage (9) comporte des évidements pour recevoir les faisceaux de poils individuels (3) de la tête de brosse (2) pendant l'injection.

18. Dispositif de moulage par injection selon l'une des revendications 14 à 17, **caractérisé en ce qu'**au moins un noyau de moulage (6a, 6b) est mobile sensiblement perpendiculairement à l'extension longitudinale des sections d'arêtes (7a, 7b).

19. Dispositif de moulage par injection selon l'une des revendications 14 à 18, **caractérisé en ce qu'**il est prévu une seconde partie de moule inférieure (10b) qui définit avec la partie de moule supérieure (9) une seconde cavité de moule (5) plus grande que la première cavité de moule (4).

20. Dispositif de moulage par injection selon l'une des revendications 14 à 19, **caractérisé en ce qu'**il est prévu un dispositif de fixation pour fixer les faisceaux de poils dans la partie de moule supérieure (9) pendant le moulage par injection.

21. Dispositif de moulage par injection selon l'une des revendications 14 à 20, **caractérisé en ce que** le dispositif de moulage par injection comporte des mécanismes pour mouler par injection le corps de base de la tête de brosse à partir d'un premier composant, et des mécanismes pour enrober par injection le corps de base à l'aide d'un second composant.
